# FASCICULE DE BREVET EUROPEEN

(11) **EP 1 848 583 B1**
(45) Date de publication et mention de la délivrance du brevet: **21.07.2010**
(21) Numéro de dépôt: 06709293.2
(22) Date de dépôt: 10.02.2006
(51) Int. Cl.: B32B 27/08

(54) **MATERIAU MULTICOUCHES AU MOINS PARTIELLEMENT BIODEGRADABLE ET PROCEDE DE FABRICATION CORRESPONDANT**
MINDESTENS TEILWEISE BIOLOGISCH ABBAUBARES MEHRLAGIGES MATERIAL UND ENTSPRECHENDES HERSTELLUNGSVERFAHREN
AT LEAST PARTIALLY BIODEGRADABLE MULTILAYERED MATERIAL AND CORRESPONDING PRODUCTION METHOD

(30) Priorité: 11.02.2005 FR 0501418
(43) Date de publication de la demande: 31.10.2007
(73) Titulaire: A.P.C.A. (Assemblee permanente des Chambres d'Agriculture), 75008 Paris (FR)
(72) Inventeur: CASTANDET, Michel, Jean, F-76000 Rouen (FR); GATTIN, Richard, Clovis, Daniel, F-76520 Montmain (FR); LEBLANC, Nathalie, Magali, F-27790 Rosay sur Lieure (FR)
(74) Mandataire: Martin, Didier Roland Valéry
(86) Numéro de dépôt international: PCT/FR2006/000309
(87) Numéro de publication internationale: WO 2006/085008

(56) Documents cités:
- WO-A-2004/052646
- FR-A- 2 791 603
- US-A- 6 040 063
- US-A1- 2003 108 701
- US-B1- 6 242 102
- PATENT ABSTRACTS OF JAPAN vol. 017, no. 368 (M-1443), 12 juillet 1993 (1993-07-12) & JP 05 057833 A (JSP CORP), 9 mars 1993 (1993-03-09)

## Description

### DOMAINE TECHNIQUE

La présente invention se rapporte au domaine technique général des matériaux multicouches formés par la réunion de plusieurs couches de polymères et notamment à des matériaux multicouches biodégradables et plastiques, c'est-à-dire susceptibles d'être mis en forme par différentes techniques de plasturgie.

La présente invention concerne plus particulièrement un matériau multicouches au moins partiellement biodégradable.

La présente invention concerne également un procédé de fabrication d'un matériau multicouches au moins partiellement biodégradable.

La présente invention concerne également une utilisation d'un mélange de polymères naturels et de polymères de synthèse pour former un matériau au moins partiellement biodégradable.

### TECHNIQUE ANTERIEURE

Il est désormais connu d'avoir recours à des polymères naturels issus des ressources agricoles (ou agro-ressources), tels que l'amidon, pour fabriquer des matériaux plastiques, susceptibles d'être transformés ou mis en forme pour obtenir des objets divers, tels que des produits d'emballage utilisés par exemple dans l'industrie agro-alimentaire.

De tels matériaux, issus des agro-ressources, permettent de limiter l'incidence de leurs résidus sur l'environnement et de favoriser leur élimination rapide, contrairement aux matériaux plastiques synthétiques issus de l'industrie chimique, tels que le PVC, le polypropylène etc...

US 6,242,102 B1 décrit un matériau mono ou multi-couche au moins partiellement biodégradable comprenant un mélange d'amidon et d'une polyoléfine.

Néanmoins, ces matériaux souffrent également de certains inconvénients, liés notamment à leurs propriétés mécaniques souvent médiocres par rapport aux propriétés des matériaux plastiques synthétiques correspondants. En particulier, ces matériaux issus des agro-ressources présentent généralement une assez mauvaise tenue à l'humidité, l'absorption des molécules d'eau pouvant alors conduire à une déstructuration des matériaux. On observe alors une dégradation rapide de leurs performances, de telle sorte que leur utilisation est souvent limitée à quelques applications particulières, pour lesquelles le caractère de biodégradabilité du matériau est plus important que ses performances mécaniques.

On a déjà pensé, pour améliorer les propriétés de ces matériaux issus des agro-ressources, à fabriquer des matériaux multicouches comportant par exemple une couche centrale majoritairement à base d'amidon thermoplastique, interposée entre deux couches externes de polymères de synthèse dont les performances, notamment sur le plan de la tenue à l'humidité, sont supérieures à celles de la couche centrale d'amidon thermoplastique.

Bien que cette solution technique permette d'améliorer sensiblement la stabilité dimensionnelle et la résistance des matériaux obtenus, elle souffre néanmoins du fait que la liaison entre les couches successives du matériau multicouches est généralement difficile à réaliser, en raison de l'incompatibilité, liée notamment à la différence de nature chimique, entre les polymères naturels, tels que l'amidon thermoplastique, et les polymères de synthèse utilisés. On observe en conséquence fréquemment un phénomène de délitescence de ces matériaux multicouches, ainsi qu'un vieillissement rapide s'accompagnant le plus souvent d'une baisse de performances.

Pour pallier ces inconvénients, on a pensé à utiliser un agent compatibilisant, (ou liant), que l'on interpose, sous la forme d'une couche supplémentaire, entre deux couches incompatibles du matériau multicouches de manière à assurer l'adhésion entre ces dernières. Le recours à cet agent compatibilisant, s'il permet effectivement d'améliorer la tenue globale du matériau, présente néanmoins l'inconvénient de générer un coût supplémentaire susceptible de nuire à l'attractivité des matériaux issus des agro-ressources, par rapport aux matériaux purement synthétiques.

Le choix de l'agent compatibilisant adéquat peut également s'avérer délicat, et nécessiter des efforts de recherche supplémentaires susceptibles de ralentir la mise sur le marché du matériau multicouches. Enfin, l'intégration de l'agent compatibilisant au sein du matériau multicouches nécessite plusieurs étapes additionnelles, augmentant ainsi la complexité du procédé d'obtention du matériau et donc son coût final.

### EXPOSE DE L'INVENTION

Les objets assignés à l'invention visent par conséquent à porter remède aux différents inconvénients énumérés précédemment et à proposer un nouveau matériau multicouches au moins partiellement biodégradable et présentant une bonne stabilité dimensionnelle dans le temps.

Un autre objet de l'invention vise à proposer un nouveau matériau multicouches présentant de bonnes propriétés mécaniques et offrant une bonne résistance au vieillissement.

Un autre objet de l'invention vise à proposer un nouveau matériau multicouches présentant une bonne tenue à l'humidité.

Un autre objet de l'invention vise à proposer un nouveau matériau multicouches qui soit entièrement biodégradable.

Un autre objet de l'invention vise à proposer un nouveau matériau multicouches qui soit entièrement compostable.

Un autre objet de l'invention vise à proposer un nouveau matériau multicouches qui soit facile à fabriquer, sa mise en oeuvre ne nécessitant qu'un nombre minimum d'opérations simples et peu coûteuses.

Un autre objet de l'invention vise à proposer un nouveau matériau multicouches présentant de bonnes propriétés de processabilité.

Les objets assignés à l'invention visent également à proposer un nouveau procédé de fabrication d'un matériau multicouches au moins partiellement biodégradable susceptible d'être mis en oeuvre de façon simple et en un nombre minimum d'étapes.

Un autre objet de l'invention vise à proposer un nouveau procédé qui soit fiable et reproductible.

Un autre objet de l'invention vise à proposer un nouveau procédé permettant l'obtention d'objets divers, dans plusieurs domaines d'application, et présentant un fini intéressant.

Un autre objet de l'invention vise à proposer un nouveau procédé permettant l'obtention d'objets présentant une bonne stabilité dimensionnelle dans le temps et de bonnes propriétés mécaniques.

Les objets assignés à l'invention visent également à proposer une nouvelle utilisation d'un mélange de polymères naturels et de synthèse permettant d'obtenir un matériau au moins partiellement biodégradable présentant de bonnes propriétés mécaniques et une bonne stabilité dimensionnelle dans le temps.

Les objets assignés à l'invention sont atteints à l'aide d'un matériau multicouches au moins partiellement biodégradable formé par la réunion :
a) d'au moins une première couche d'un premier matériau à base majoritairement d'au moins un polysaccharide naturel,
b) d'au moins une deuxième couche d'un deuxième matériau comprenant un mélange à base d'au moins un polysaccharide naturel et d'au moins un polymère de synthèse choisi avec des propriétés mécaniques supérieures à celles du polysaccharide naturel de manière à obtenir un matériau multicouches présentant des propriétés mécaniques supérieures à celles de la première couche.

Les objets assignés à l'invention sont également atteints à l'aide d'un procédé de fabrication d'un matériau multicouches au moins partiellement biodégradable comportant une étape (a) de co-extrusion d'un premier matériau à base majoritairement d'au moins un polysaccharide avec un deuxième matériau comprenant un mélange à base d'au moins un polysaccharide et d'au moins un polymère de synthèse choisi avec des propriétés mécaniques supérieures à celles du polysaccharide de manière à obtenir un matériau multicouches présentant des propriétés mécaniques supérieures à celles du premier matériau.

Les objets assignés à l'invention sont également atteints à l'aide d'une utilisation d'un mélange à base d'au moins un polysaccharide naturel et d'au moins un polymère de synthèse choisi avec des propriétés mécaniques supérieures à celles du polysaccharide naturel en tant que l'une des couches d'un matériau multicouches au moins partiellement biodégradable pour améliorer les propriétés mécaniques du matériau.

### DESCRIPTIF SOMMAIRE DES DESSINS

D'autres particularités et avantages de l'invention apparaîtront plus en détails à la lecture de la description qui suit, ainsi qu'à l'aide des dessins annexés donnés à titre purement illustratif et non limitatif, dans lesquels:
- La figure 1 illustre, selon une vue schématique en coupe, un mode de réalisation préférentielle d'un matériau multicouches conforme à l'invention.
- La figure 2 illustre, sous forme graphique, l'effet de l'incorporation de charges minérales sur les propriétés mécaniques du matériau multicouches conforme à l'invention.
- La figure 3 illustre, sous forme graphique, les propriétés mécaniques du matériau multicouches conforme à l'invention.

### MEILLEURE MANIERE DE REALISER L'INVENTION

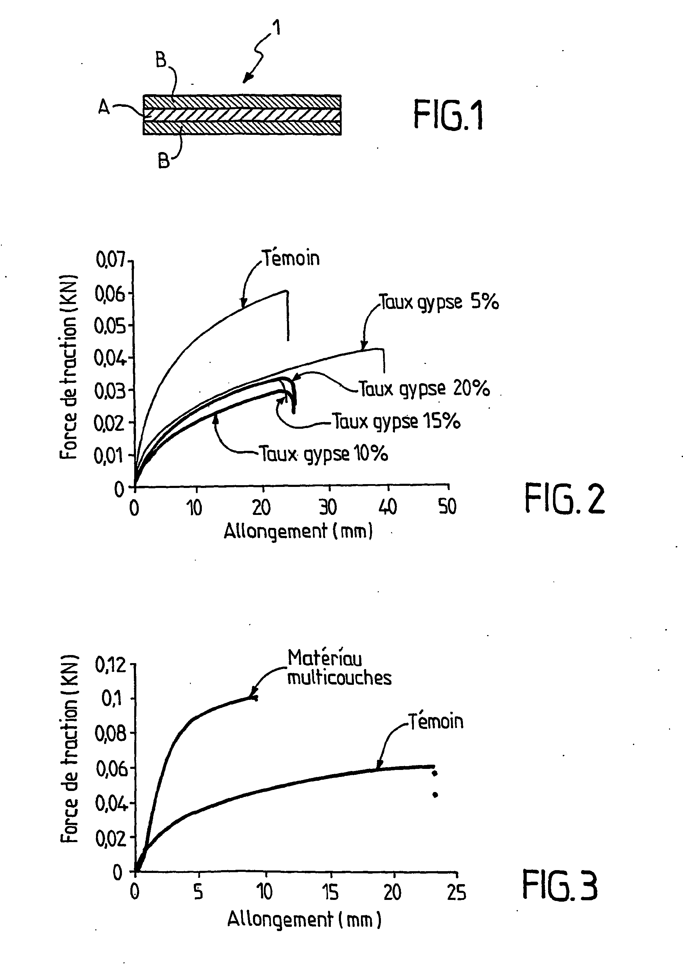

Un mode de réalisation préférentielle du matériau 1 multicouches conforme à l'invention est illustré sur la figure 1.

Par « *matériau multicouches* », on désigne un matériau formé par l'empilement ou la réunion de plusieurs couches juxtaposées les unes par rapport aux autres.

Le matériau 1 multicouches conforme à l'invention est, au moins partiellement, biodégradable ce qui signifie qu'il présente de bonnes propriétés de biodégradabilité par rapport aux matériaux plastiques de synthèse usuels, tels que le polychlorure de vinyle (PVC) ou le polypropylène, et que l'incidence de ses résidus sur l'environnement est limitée, non seulement du point de vue de leur toxicité chimique mais également du point de vue de leur rapidité d'élimination.

De façon préférentielle, le matériau 1 multicouches conforme à l'invention est entièrement biodégradable, c'est-à-dire qu'il possède des qualités telles qu'il répond aux exigences de la norme française NF EN 13432 de novembre 2000.

Selon l'invention, le matériau 1 multicouches comprend au moins une première couche A d'un premier matériau à base majoritairement d'au moins un polysaccharide naturel.

Selon l'invention, le matériau 1 comprend en outre au moins une deuxième couche B d'un deuxième matériau comprenant un mélange à base d'au moins un polysaccharide naturel et d'au moins un polymère de synthèse choisi avec des propriétés mécaniques supérieures à celles du polysaccharide naturel de manière à obtenir un matériau multicouches présentant des propriétés mécaniques supérieures à celles de la première couche A.

Avantageusement, le premier matériau (ou la première couche A) est majoritairement et de préférence intégralement issu de la bio-masse et constitue un produit des agro-ressources.

L'expression « *polysaccharide naturel* » fait donc référence à des macromolécules glucidiques issues naturellement et directement, c'est-à-dire sans intervention chimique, des agro-ressources. Le polysaccharide utilisé n'a donc pas été modifié chimiquement.

De façon préférentielle, le polysaccharide est issu d'une matière première brute biodégradable, telle que le blé. Le premier matériau est ainsi de préférence majoritairement à base de farine céréalière, et encore plus préférentiellement à base d'extrait de farine, notamment de blé, qu'il contient en tant que composant majoritaire. Les farines ou extraits céréaliers sont avantageusement sélectionnées de manière à présenter, naturellement, des propriétés filmogènes, provenant notamment de leurs deux composants principaux, à savoir l'amidon et, en plus faibles proportions, le gluten. Cette sélection des farines en fonction de leurs propriétés filmogènes peut être effectuée à l'aide de mesures viscosimétriques, ou de mesures visant à apprécier la manipulabilité des films obtenus par coulage. Une bonne manipulabilité des films s'évalue notamment par leur faculté de résister à des pliages successifs sans se rompre. La matière première ainsi sélectionnée permet d'obtenir une farine ou un extrait de farine présentant des propriétés rhéologiques optimales, susceptible de conduire à la fabrication d'un matériau plastique de bonne qualité.

Selon une caractéristique particulièrement intéressante de l'invention, l'extrait de farine est obtenu par turbo-séparation, c'est-à-dire par fractionnement mécanique, par voie sèche et non-humide, de la matière première brute, à savoir par exemple le blé. L'extrait de farine est donc obtenu sans intervention chimique. La granulométrie moyenne de cet extrait de farine est avantageusement contrôlée et de préférence comprise entre 20 µm et 35 µm, au moins 90 % des particules ayant une taille inférieure à 70 µm, afin d'améliorer la reproductibilité du procédé de fabrication et l'homogénéité du matériau.

Avantageusement, la teneur en extrait de farine, notamment de blé, du premier matériau est comprise entre 50 % et 85 % du poids total et plus préférentiellement entre 60 % et 85 %. Les proportions en amidon de l'extrait de farine sont de préférence comprises entre 60 % et 90 %, les proportions en protéines (majoritairement du gluten) étant quant à elles préférentiellement comprises entre 5 % et 12 %.

De façon préférentielle, le premier matériau comprend également des plastifiants et autres additifs naturels, à hauteur de 12 à 40 % afin d'améliorer ses propriétés de mise en forme.

La teneur en plastifiant est préférentiellement comprise entre 0 et 30 % en poids.

Plus précisément, les plastifiants permettent d'améliorer la plasticité (ou thermoplasticité) du premier matériau par rapport à l'extrait de farine initial.

De façon préférentielle, les plastifiants sont choisis parmi les polyols, et de préférence parmi le glycérol, le mannitol et/ou le sorbitol. De façon préférentielle, lorsque le plastifiant est du glycérol, sa proportion dans la composition du premier matériau est comprise entre 0 et 30 % en poids, de préférence entre 10 et 20 % en poids, et plus préférentiellement entre 9 et 20 % en poids. Si le plastifiant utilisé est du sorbitol (ou du mannitol), cette teneur est comprise entre 0 et 15 % en poids et préférentiellement inférieure à 10 % en poids.

Selon une variante de réalisation de l'invention, le premier matériau peut également comporter un autre additif, tel que le stéarate de magnésium ou de potassium. Présent en proportion d'environ 1 à 6 % en poids dans le premier matériau, le stéarate de magnésium ou de potassium constitue avantageusement un lubrifiant permettant de faciliter la mise en forme du matériau, notamment par extrusion.

Le premier matériau peut en outre comporter un colorant, tel que le dioxyde de titane (TiO₂), dont la proportion est avantageusement comprise entre 0.5 et 5 % en poids et qui permet de conférer une couleur blanche au premier matériau.

D'autres additifs, tels que l'eau ou la silice, peuvent encore améliorer la mise en forme et notamment l'extrusion du premier matériau.

Avantageusement, le premier matériau peut également comporter des charges minérales, telles que du gypse, incorporées à hauteur de 10 à 20 % en poids, et de préférence à hauteur de 5 % dans le cas du gypse. L'incorporation de gypse dans le premier matériau permet ainsi d'améliorer sensiblement ses propriétés mécaniques, et notamment l'allongement à la rupture du premier matériau.

Ainsi, tel que cela est illustré sur la figure 2, le premier matériau, lorsqu'il comprend de l'ordre de 5 % de gypse, présente un allongement à la rupture beaucoup plus important que le matériau témoin, dépourvu de gypse. Plus précisément, on observe un allongement à la rupture de 233 % pour le matériau comprenant 5 % de gypse contre un allongement à la rupture de 177 % pour le matériau témoin, soit un gain relatif de 32 %. Pour les taux d'incorporation de gypse de 10, 15 et 20 %, l'allongement à la rupture est au moins égal à celui du matériau témoin, dépourvu de gypse, mais avec une résistance plus faible.

Le tableau 1 ci-dessous correspond aux résultats des essais de traction illustrés graphiquement sur la figure 2. Lesdits essais ont été réalisés à température ambiante, soit environ à 20°C, sur des éprouvettes dont les dimensions étaient sensiblement les suivantes : longueur au repos (distance initiale entre les mors de la machine de traction) de 30 mm, largeur au repos de 18 mm et épaisseur au repos de 500 µm. Les allongements à la rupture sont exprimés en pourcentage et calculés comme le rapport des longueurs absolues des éprouvettes lors de la rupture, telles qu'indiquées en millimètres sur la figure 2, sur la longueur au repos desdites éprouvettes.

**Tableau 1**

| Charge en gypse [% en poids] | Allongement à la rupture « A » [%] | Résistance à la rupture « R_{R} » [MPa] |
|---|---|---|
| 0 (témoin) | 177 | 32 |
| 5 | 233 | 25 |
| 10 | 177 | 17 |
| 15 | 183 | 17,5 |
| 20 | 183 | 16 |

Le premier matériau peut également comporter des charges végétales.

Le premier matériau est ainsi avantageusement sensiblement entièrement d'origine naturelle, c'est-à-dire que ses composants sont d'origine naturelle et n'ont pas fait l'objet de modifications chimiques.

De façon préférentielle, le premier matériau est mis en forme, avant son intégration au sein du matériau 1 multicouches, sous forme de granulés, à l'aide d'un procédé d'extrusion.

L'indice de fluidité à chaud du premier matériau ainsi formé est avantageusement compris entre 7 et 30g/10mn, sous charge de 21,6 kg à 150°C, et de préférence de l'ordre de 22g / 10mn.

Afin d'améliorer les propriétés mécaniques, et notamment la tenue à l'humidité, du matériau 1 multicouches, la première couche A est recouverte par la deuxième couche B du deuxième matériau, qui comprend un mélange à base d'au moins un polysaccharide naturel et d'au moins un polymère de synthèse.

L'expression « *polymère de synthèse* » désigne ici un polymère intégralement fabriqué par l'homme, par voie chimique, ou obtenu à partir d'un polymère naturel chimiquement modifié. Le polymère de synthèse n'est donc pas issu directement et naturellement des agro-ressources ou de la biomasse.

Selon une caractéristique importante de l'invention, le polysaccharide naturel est présent dans le mélange de la deuxième couche B en quantité suffisante pour assurer la compatibilité entre la première et la deuxième couche A, B. La présence de macromolécules glucosiques (ou de polysaccharides) dans chacune des couches A, B permet ainsi d'améliorer l'adhésion entre ces dernières en limitant les phénomènes d'instabilité à l'interface entre les couches A, B. Ceci permet donc d'éviter d'avoir recours à un agent compatibilisant supplémentaire pour assurer cette fonction de liant.

De façon préférentielle, la quantité de polysaccharide dans le mélange de la deuxième couche B est supérieure à la quantité de polymère de synthèse. Plus précisément, le polysaccharide naturel est présent de façon majoritaire dans le mélange de la deuxième couche B par rapport au polymère de synthèse. La teneur en polysaccharide naturel dans le mélange de la deuxième couche B est ainsi avantageusement supérieure à 50 %, préférentiellement supérieure à 60 %. On cherche au contraire à minimiser la quantité de polymère de synthèse utilisé. Cette quantité doit donc être la plus faible possible, tout en conférant des propriétés mécaniques satisfaisantes au matériau final.

Au sens de l'invention, le polymère de synthèse présente des propriétés mécaniques supérieures à celles du polysaccharide naturel, ou au premier matériau formant la première couche A. L'expression « *propriété mécanique* » fait référence non seulement à la résistance mécanique du matériau mais également à sa tenue à l'humidité et à sa facilité de mise en oeuvre (processabilité).

De façon préférentielle, le polymère de synthèse est choisi dans le groupe des polymères de synthèse comportant au moins un groupement chimique hydrolysable, dits polymères de synthèse hydrophiles.

Par « *polymères de synthèse hydrophiles* » on désigne ici des polymères composés d'un enchaînement d'unités constitutives comprenant au moins un groupement chimique hydrophile, c'est-à-dire hydrolysable, tels qu'un groupement acide, ester ou amide. De tels polymères sont préférentiellement linéaires, donc thermoplastiques, et comportent une liaison labile susceptible d'interagir, par effet électrostatique, avec les liaisons hydrogènes correspondantes des polysaccharides naturels pour assurer la liaison physique (et non nécessairement chimique) entre les polysaccharides et le polymère de synthèse hydrophile.

Le terme « *mélange* » fait donc référence ici à un mélange physique et non chimique, correspondant à une interaction électrostatique entre le polymère de synthèse hydrophile et le polysaccharide naturel.

De façon préférentielle, le polymère de synthèse présent dans le mélange de la deuxième couche B présente une chaîne principale sensiblement hydrophobe, c'est-à-dire plus hydrophobe que le polysaccharide naturel, et pourvue d'au moins un groupement hydrophile. Le caractère globalement hydrophobe du polymère de synthèse utilisé permet d'améliorer, de façon notable, le comportement du matériau 1 multicouches vis-à-vis de l'humidité. La présence du groupement chimique hydrophile ou hydrolysable est ici sans préjudice du caractère globalement hydrophobe de ces polymères, provenant de la structure de leur chaîne principale. En d'autres termes, ces polymères, localement hydrophiles et hydrolysables, présentent de bonnes propriétés globales d'hydrophobie.

De façon préférentielle, le polymère de synthèse est choisi dans le groupe des polymères de synthèse biodégradables, et de préférence compostables, répondant aux exigences de la norme NF EN-13432.

Le matériau 1 multicouches conforme à l'invention, dont chacune des couches A, B est biodégradable, constitue alors avantageusement un matériau entièrement biodégradable au sens de la norme NF EN-13432.

De façon préférentielle, le polymère de synthèse est choisi dans le groupe formé par le poly(alcool de vinyle), le poly(éthylène-co-alcool de vinyle), le poly(caprolactone) ou encore l'acétate de cellulose. Si tous ces polymères de synthèse hydrophiles sont biodégradables, seul le poly(éthylène-co-alcool de vinyle), le poly(caprolactone) et l'acétate de cellulose sont compostables.

Avantageusement, le mélange de la deuxième couche B comprend également de l'amidon, de préférence de blé, formant le polysaccharide naturel et dont la teneur dans le mélange est préférentiellement supérieure à 60 %.

De façon particulièrement avantageuse, l'affinité chimique entre l'amidon et le polymère de synthèse garantit une excellente cohésion entre ces deux composants au sein-même de la deuxième couche B, et notamment entre différentes phases de ladite deuxième couche B. En particulier, cette affinité chimique permet à la deuxième couche B, considérée séparément, de présenter une bonne tenue aux sollicitations mécaniques.

Avantageusement, le deuxième matériau formant la deuxième couche B présente un indice de fluidité à chaud sensiblement compris entre 0,2 et 1g / 10mn, sous charge de 21,6 kg à 150°C, et de préférence de l'ordre de 0,5g / 10mn.

A titre purement indicatif, on pourra utiliser, pour former la deuxième couche B, un matériau de la gamme connue sous l'appellation Mater Bi^{®} commercialisée par la société NOVAMONT.

Selon la variante préférentielle de réalisation illustrée sur la figure 1, le matériau 1 multicouches conforme à l'invention comporte au moins trois couches, à savoir une première couche A interne, formée par le premier matériau, disposée entre deux couches externes B formées par le deuxième matériau. Le matériau 1 multicouches conforme à l'invention constitue alors, dans cette variante préférentielle, un matériau tri-couches B/A/B. Les propriétés hydrophobes du matériau 1 multicouches conforme à l'invention sont ainsi avantageusement renforcées par la présence des deux couches externes B formées par le deuxième matériau. Les couches externes B isolent ainsi avantageusement la couche interne A de l'humidité.

Selon une caractéristique très importante de l'invention, la première et la deuxième couches A, B sont directement superposées l'une sur l'autre, sans couche intermédiaire d'agent compatibilisant.

Avantageusement, les proportions en poids des différentes couches sont comprises entre 70% et 90% pour la première couche A (ou couche interne), et comprises entre 5% et 15% pour chaque couche externe B.

Les propriétés du matériau 1 multicouches conforme à l'invention vont maintenant être décrites dans le cas d'un exemple de réalisation préférentielle, où le matériau 1 est un tri-couches B/A/B comportant :
- une première couche A interne d'un premier matériau comportant environ 50 à 85% en poids d'extrait de blé, additionné de 12 à 40% en poids de plastifiants et autres additifs naturels,
- deux couches externes B d'un deuxième matériau issu de la gamme Mater Bi^{®} et dont le grade est NF01U, qui comprend, en tant que composants essentiels, de l'amidon de blé, et un polymère de synthèse comportant au moins un groupement chimique hydrolysable.

### Tenue à l'humidité

Tel que cela est illustré dans le tableau 2 ci-dessous, on observe que l'angle de contact liquide-solide est plus élevé, dans le cas de l'eau, pour le matériau 1 multicouches conforme à l'invention que pour le premier matériau formant la couche interne A.

**Tableau 2**

| | Premier matériau | Matériau multicouches |
|---|---|---|
| θ*ₑₐᵤ* (°) | 5 | 63 |

Le matériau 1 multicouches conforme à l'invention, moins sensible à l'humidité que le premier matériau, présente donc une meilleure stabilité dimensionnelle dans le temps.

### Résistance mécanique

Tel que cela est illustré sur la figure 3, les propriétés mécaniques et notamment la résistance à la traction du matériau 1 multicouches conforme à l'invention sont également supérieures à celle du premier matériau formant la couche interne A du matériau 1 multicouches.

Le tableau 3 ci-dessous reprend les résultats des essais de traction illustrés sur la figure 3. Lesdits essais on été réalisés à température ambiante, soit environ à 20°C, sur des éprouvettes dont les dimensions étaient sensiblement les suivantes : longueur au repos (distance initiale entre les mors de la machine de traction) de 30 mm, largeur au repos de 18 mm. Les allongements à la rupture sont exprimés en pourcentage et calculés comme le rapport des longueurs absolues des éprouvettes lors de la rupture, telles qu'indiquées en millimètres sur la figure 2, sur la longueur au repos desdites éprouvettes.

**Tableau 3**

| Matériau | Allongement à la rupture « A » [%] | Résistance à la rupture « R_{R} » [MPa] |
|---|---|---|
| Premier matériau seul (témoin) Monocouche A | 177 | 32 |
| Matériau multicouche B/A/B | 133 | 282 |

En particulier, le calcul des contraintes maximales correspondant aux courbes de traction illustrées sur la figure 3 permet d'obtenir, pour le matériau 1 multicouches conforme à l'invention, une valeur de 282 MPa au lieu de 32 MPa pour le premier matériau. Ainsi, la résistance à la rupture en traction du matériau multicouche est sensiblement supérieure à celle du premier matériau. En d'autres termes, le matériau 1 multicouches conforme à l'invention est donc susceptible de résister à des contraintes de traction plus importantes que le premier matériau.

La présente invention concerne également un procédé de fabrication d'un matériau 1 multicouches au moins partiellement biodégradable comportant une étape (a) de co-extrusion d'un premier matériau à base majoritairement d'au moins un polysaccharide naturel avec un deuxième matériau comprenant un mélange à base d'au moins un polysaccharide naturel et d'au moins un polymère de synthèse choisi avec des propriétés mécaniques supérieures à celles du polysaccharide naturel de manière à obtenir un matériau 1 multicouches présentant des propriétés mécaniques supérieures à celles du premier matériau.

Le premier matériau est obtenu par un premier procédé comportant :
- une étape de malaxage des réactifs (extrait de farine, plastifiant et additifs) afin d'homogénéiser le mélange,
- une étape de mise en forme du matériau, de préférence sous la forme granulés obtenus par extrusion et dont l'indice de fluidité à chaud est avantageusement compris entre 7 et 30g / 10mn sous charge de 21,6kg à 150°C.

Ces deux étapes de malaxage et de mise en forme peuvent avantageusement être mises en oeuvre simultanément, à l'aide d'une extrudeuse monovis, par exemple de modèle Scamex^{®}, sous une température comprise préférentiellement entre 90°C et 150°C. L'extrusion des granulés s'effectue de manière classique et ne fait donc pas l'objet d'une description détaillée.

Le deuxième matériau, par exemple le Mater Bi^{®}, se présente également, de façon avantageuse, sous la forme de granulés d'indice de fluidité à chaud préférentiellement compris entre 0,2 et 1g / 10mn sous charge de 21,6kg à 150°C.

L'étape (a) de co-extrusion s'effectue avantageusement à l'aide d'une première extrudeuse, pour réaliser au moins une première couche A du premier matériau et d'une deuxième extrudeuse pour réaliser au moins une deuxième couche B du deuxième matériau, les première et deuxième extrudeuses, de préférence monovis et de modèle Scamex^{®}, étant raccordées sur une même filière. La température des extrudeuses est avantageusement fixée à une valeur comprise entre 90°C et 140°C. La matière est répartie entre les deux extrudeuses à l'aide d'un boîtier de répartition de matière (ou de co-extrusion) approprié.

Avantageusement, l'étape (a) de co-extrusion permet ainsi d'obtenir un matériau 1 tri-couches B/A/B dont la couche interne A est formée par le premier matériau et les couches externes B sont formées par le deuxième matériau.

L'étape (a) de co-extrusion comprend avantageusement une phase de fabrication d'une ou plusieurs feuilles de matériau multicouches, à l'aide d'une filière plate.

Le procédé conforme à l'invention comprend ensuite avantageusement une étape (b) de transformation de ladite ou desdites feuilles par thermoformage, l'étape (b) consistant à faire subir un traitement à chaud aux feuilles susmentionnées afin de leur conférer une forme pré-déterminée, ladite forme étant définitivement conservée après refroidissement.

Avantageusement, la mise en forme des feuilles du matériau 1 multicouches conforme à l'invention s'effectue à une température comprise entre 80°C et 150°C.

Le procédé conforme à l'invention permet ainsi de fabriquer différents produits d'emballage et notamment des verres, assiettes ou barquettes pour la restauration rapide. Il peut s'agir de produits à usage unique, mais également de produits réutilisables, compte-tenu de la bonne stabilité dimensionnelle du matériau 1 multicouches conforme à l'invention, et notamment de sa bonne tenue à l'humidité.

Le matériau 1 multicouches conforme à l'invention peut également être étiré sous la forme de feuilles d'épaisseur variable, par exemple comprise entre environ 100µm et 1mm, ou de films d'épaisseur inférieure à 100µm. A titre d'illustration, le matériau 1 multicouches ainsi étiré sous forme de film ou de feuille pourra être utilisé dans le domaine du paillage agricole, par exemple pour former des films de paillage plus ou moins épais.

La présente invention concerne également une nouvelle utilisation d'un mélange, à base d'au moins un polysaccharide naturel et d'au moins un polymère de synthèse choisi avec des propriétés mécaniques supérieures à celles du polysaccharide naturel, en tant que l'une des couches (B) et de préférence en tant que couche externe d'un matériau 1 multicouches au moins partiellement biodégradable pour améliorer les propriétés mécaniques du matériau 1.

La présente invention concerne plus particulièrement une nouvelle utilisation d'un mélange à base d'au moins un polysaccharide naturel et d'au moins un polymère de synthèse choisi avec des propriétés mécaniques supérieures à celles du polysaccharide naturel, en tant que deuxième couche B d'un matériau 1 multicouches au moins partiellement biodégradable comportant au moins une première couche A formée par un premier matériau, distinct du mélange, à base majoritairement d'au moins un polysaccharide naturel, de telle manière que le matériau 1 multicouches ainsi formé présente des propriétés mécaniques supérieures à celles de la première couche A.

Avantageusement, le polymère de synthèse est choisi dans le groupe des polymères de synthèse biodégradables et de préférence compostables, et comportant au moins un groupement chimique hydrolysable.

De façon encore plus préférentielle, le polymère de synthèse est choisi dans le groupe formé par le poly(alcool de vinyle), poly(éthylène-co-alcool de vinyle), le poly(caprolactone) et l'acétate de cellulose.

Avantageusement, le mélange de la deuxième couche B comprend de l'amidon, et préférentiellement de l'amidon de blé, qui forme le polysaccharide naturel. Le matériau formant la première couche A comprend, quant à lui, de l'extrait de farine, par exemple de blé, en tant que composant majoritaire, ledit extrait de farine contenant naturellement le polysaccharide naturel. Le matériau 1 multicouches conforme à l'invention présente donc l'avantage d'être fabriqué en majorité à partir de polymères d'origine naturelle, issus des agro-ressources.

Le matériau 1 multicouches conforme à l'invention possède de meilleures propriétés de biodégradabilité que les matériaux plastiques de synthèse usuels, tout en présentant une bonne plasticité, permettant sa mise en forme sans difficulté et la fabrication de produits utilisables dans des applications nombreuses et variées sensiblement similaires à celles des matériaux plastiques de synthèse d'origine non naturelle.

Un autre avantage du matériau multicouches conforme à l'invention est qu'il est plus économique que les matériaux utilisant, en tant que composants majoritaires, des polymères de synthèse. Le matériau 1 multicouches conforme à l'invention ne nécessite en effet, pour sa fabrication, qu'un faible pourcentage de polymères de synthèse, la majorité des polymères le constituant, tels que le polysaccharide, étant d'origine naturelle et directement issus des agro-ressources.

Le matériau 1 multicouches conforme à l'invention peut également, grâce à ses propriétés thermoplastiques, être facilement transformé en différents objets d'usage courant compostables, destinés par exemple à l'agro-industrie (pots de fleur) ou encore à l'agro-alimentaire (emballages).

### POSSIBILITE D'APPLICATION INDUSTRIELLE

La présente invention trouve son application industrielle dans la fabrication de matériaux biodégradables destinés à servir de matières premières à l'élaboration de différents objets d'usage courant, par exemple d'emballages, notamment à destination du secteur agro-alimentaire.

## Revendications

1. Matériau multicouches au moins partiellement biodégradable formé par la réunion :
- a) d'au moins une première couche (A) d'un premier matériau à base majoritairement d'au moins un polysaccharide naturel,
- b) d'au moins une deuxième couche (B) d'un deuxième matériau comprenant un mélange à base d'au moins un polysaccharide naturel et d'au moins un polymère de synthèse choisi avec des propriétés mécaniques supérieures à celles du polysaccharide naturel de manière à obtenir un matériau multicouches présentant des propriétés mécaniques supérieures à celles de la première couche, ledit polymère de synthèse étant choisi dans le groupe des polymères de synthèse comportant au moins un groupement chimique hydrolysable.

2. Matériau selon la revendication 1 **caractérisé en ce que** le polysaccharide naturel est présent dans le mélange de la deuxième couche (B) en quantité suffisante pour assurer la compatibilité entre la première et la deuxième couches (A, B).

3. Matériau selon la revendication 2 **caractérisé en ce que** le polymère de synthèse présente une chaîne principale sensiblement hydrophobe pourvue d'au moins un groupement hydrophile.

4. Matériau selon l'une des revendications précédentes **caractérisé en ce que** le polymère de synthèse est choisi dans le groupe des polymères de synthèse biodégradables, de préférence compostables.

5. Matériau selon la revendication 4 **caractérisé en ce que** le polymère de synthèse est choisi dans le groupe formé par le poly(alcool de vinyle), le poly(éthylène-co-alcool de vinyle), le poly(caprolactone), l'acétate de cellulose.

6. Matériau selon l'une des revendications 1 à 5 **caractérisé en ce que** le premier matériau est majoritairement à base de farine ou d'extrait céréalier.

7. Matériau selon la revendication 6 **caractérisé en ce que** le premier matériau comprend, en tant que composant majoritaire, de l'extrait de blé.

8. Matériau selon la revendication 7 **caractérisé en ce que** la teneur en extrait de blé est comprise entre 50% et 85%.

9. Matériau selon l'une des revendications précédentes **caractérisé en ce que** le premier matériau comprend des plastifiants, de préférence choisis dans le groupe des polyols tels que le glycérol, le mannitol et le sorbitol.

10. Matériau selon la revendication 9 **caractérisé en ce que** la teneur en plastifiants est inférieure à 30%, et de préférence comprise entre 10% et 20% pour le glycérol.

11. Matériau selon l'une des revendications précédentes **caractérisé en ce que** le premier matériau comprend des charges minérales, du genre gypse.

12. Matériau selon la revendication 11 **caractérisé en ce que** la teneur en charges minérales est comprise entre 10% et 20%, de préférence de l'ordre 5% dans le cas du gypse.

13. Matériau selon l'une des revendications précédentes **caractérisé en ce que** le polysaccharide naturel présent dans le mélange de la deuxième couche (B) est de l'amidon, et de préférence de l'amidon de blé.

14. Matériau selon l'une des revendications précédentes **caractérisé en ce que** l'indice de fluidité à chaud du premier matériau est compris entre 7 et 30g / 10mn, sous charge de 21,6kg à 150°C, et de préférence de l'ordre de 22 g / 10mn.

15. Matériau selon l'une des revendications précédentes **caractérisé en ce que** l'indice de fluidité à chaud du deuxième matériau est compris entre 0,2 et 1g / 10mn, sous charge de 21,6kg à 150°C, et de préférence de l'ordre de 0,5g / 10mn.

16. Matériau selon l'une des revendications précédentes **caractérisé en ce que** la première et la deuxième couche (A, B) sont directement superposées l'une sur l'autre, sans couche intermédiaire de compatibilisant.

17. Matériau selon l'une des revendications précédentes **caractérisé en ce que** la couche (A) de premier matériau est interposée entre deux couches externes (B) de deuxième matériau.

18. Procédé de fabrication d'un matériau (1) multicouches au moins partiellement biodégradable comportant une étape (a) de co-extrusion d'un premier matériau à base majoritairement d'au moins un polysaccharide naturel avec un deuxième matériau comprenant un mélange à base d'au moins un polysaccharide naturel et d'au moins un polymère de synthèse choisi avec des propriétés mécaniques supérieures à celles du polysaccharide naturel de manière à obtenir un matériau multicouches présentant des propriétés mécaniques supérieures à celles du premier matériau, ledit polymère de synthèse étant choisi dans le groupe des polymères de synthèse comportant au moins un groupement hydrolysable.

19. Procédé selon la revendication 18 **caractérisé en ce que** l'étape (a) de co-extrusion s'effectue à l'aide d'une première extrudeuse pour réaliser au moins une première couche (A) du premier matériau et d'une deuxième extrudeuse pour réaliser au moins une deuxième couche (B) du deuxième matériau, les première et deuxième extrudeuses étant raccordées sur une même filière.

20. Procédé selon la revendication 18 ou 19 **caractérisé en ce que** l'étape (a) de co-extrusion comprend une phase de fabrication d'une ou plusieurs feuilles de matériau (1) multicouches, à l'aide d'une filière plate.

21. Procédé selon la revendication 20 **caractérisé en ce qu'**il comprend une étape (b) de thermoformage de ladite ou desdites feuilles.

22. Utilisation d'un mélange à base d'au moins un polysaccharide naturel et d'au moins un polymère de synthèse choisi avec des propriétés mécaniques supérieures à celles dudit polysaccharide naturel, pour former une deuxième couche (B) au sein d'un matériau (1) multicouches au moins partiellement biodégradable comportant au moins une première couche (A) à base majoritairement d'au moins un polysaccharide naturel, afin d'améliorer les propriétés mécaniques dudit matériau (1) multicouches par rapport à celles de la première couche (A), ledit polymère de synthèse étant choisi dans le groupe des polymères de synthèse comportant au moins un groupement hydro/ysable.

23. Utilisation selon la revendication 22 **caractérisée en ce que** le polymère de synthèse est choisi dans le groupe des polymères de synthèse comportant au moins un groupement chimique hydrolysable.

24. Utilisation selon la revendication 22 ou 23 **caractérisée en ce que** le polymère de synthèse est choisi dans le groupe des polymères de synthèse biodégradables, de préférence compostables.

25. Utilisation selon la revendication 24 **caractérisée en ce que** le polymère de synthèse est choisi dans le groupe formé par le poly(alcool de vinyle), le poly(éthylène-co-alcool de vinyle), le poly(caprolactone) et l'acétate de cellulose.

26. Utilisation selon l'une des revendications 22 à 25 **caractérisée en ce que** le matériau (1) multicouches comporte au moins une première couche (A) formée par un premier matériau, distinct du mélange, et à base majoritairement d'au moins un polysaccharide naturel.

27. Utilisation selon la revendication 26 **caractérisée en ce que** le matériau formant la première couche (A) comprend, en tant que composant majoritaire, de l'extrait de farine, et de préférence de l'extrait de blé.

28. Utilisation selon l'une des revendications 22 à 27 **caractérisée en ce que** le polysaccharide naturel présent dans le mélange est de l'amidon, et de préférence de l'amidon de blé.

## Claims

1. Multilayered material, at least partially biodegradable, formed by the combination of:
a) at least one first layer (A) of a first material based for the most part on at least one natural polysaccharide,
b) at least one second layer (B) of a second material comprising a mixture based on at least one natural polysaccharide and at least one synthetic polymer selected with mechanical properties superior to those of the natural polysaccharide so as to obtain a multilayered material with mechanical properties superior to those of the first layer, said synthetic polymer being selected from the group of synthetic polymers comprising at least one hydrolysable chemical grouping.

2. Material according to claim 1, **characterised in that** the natural polysaccharide is present in the mixture of the second layer (B) in sufficient quantity to ensure compatibility between the first and second layers (A, B).

3. Material according to claim 2, **characterised in that** the synthetic polymer has a main chain which is largely hydrophobic and comprises at least one hydrophilic grouping.

4. Material according to any of the preceding claims, **characterised in that** the synthetic polymer is selected from the group of biodegradable, preferably compostable, synthetic polymers.

5. Material according to claim 4, **characterised in that** the synthetic polymer is selected from the group formed by poly(vinyl alcohol), poly(ethylene-co-vinyl alcohol), poly(caprolactone), cellulose acetate.

6. Material according to any of claims 1 to 5, **characterised in that** the first material is based for the most part on flour or cereal extrait

7. Material according to claim 6, **characterised in that** the first material comprises wheat extract as majority component.

8. Material according to claim 7, **characterised in that** the content of wheat extract is between 50% and 85%,

9. Material according to any of the preceding claims, **characterised in that** the first material comprises plasticizers, preferably selected from the group of polyols such as glycerol, mannitol and sorbitol.

10. Material according to claim 9, **characterised in that** the content of plasticizers is less than 30%, preferably between 10% and 20% for glycerol.

11. Material according to any of the preceding claims, **characterised in that** the first material comprises mineral fillers of the gypsum type.

12. Material according to claim 11, **characterised in that** the content of mineral fillers is between 10% and 20%, preferably of the order of 5% in the case of gypsum.

13. Material according to any of the preceding claims, **characterised in that** the natural polysaccharide present in the mixture of the second layer (B) is starch, preferably wheat starch.

14. Material according to any of the preceding claims, **characterised in that** the hot flow figure of the first material is between 7 and 30 g / 10 min under a load of 21.6 kg at 150°C, preferably of the order of 22 g / 10 min.

15. Material according to any of the preceding claims, **characterised in that** the hot flow figure of the second material is between 0.2 and 1 g / 10 min under a load of 21.6 kg at 150°C, preferably of the order of 0.5 g / 10 min.

16. Material according to any of the preceding claims, **characterised in that** the first and second layers (A, B) are directly superposed one on the other without an intermediate compatibility-promoting layer.

17. Material according to any of the preceding claims, **characterised in that** the layer (A) of the first material is interposed between two external layers (B) of the second material.

18. Method for production of a multilayered material (1) which is at least partially biodegradable, comprising a step (a) of co-extrusion of a first material based for the most part on at least one natural polysaccharide with a second material comprising a mixture based on at least one natural polysaccharide and at least one synthetic polymer selected with mechanical properties superior to those of the natural polysaccharide so as to obtain a multilayered material with mechanical properties superior to those of the first material, said synthetic polymer being selected from the group of synthetic polymers comprising at least one hydrolysable grouping.

19. Method according to claim 18, **characterised in that** step (a) of co-extrusion is performed using a first extruder to produce at least one first layer (A) of the first material and a second extruder to produce at least one second layer (B) of the second material, the first and second extruders being connected to the same extrusion die.

20. Method according to claim 18 or 19, **characterised in that** step (a) of co-extrusion comprises a phase of production of one or more sheets of multilayered material (1) using a flat extrusion die.

21. Method according to claim 20, **characterised in that** it comprises a step (b) of thermoforming said sheet or sheets.

22. Use of a mixture based on at least one natural polysaccharide and at least one synthetic polymer selected with mechanical properties superior to those of said natural polysaccharide to form a second layer (B) within a multilayered material (1) which is at least partially biodegradable comprising at least one first layer (A) based for the most part on at least one natural polysaccharide in order to improve the mechanical properties of said multilayered material (1) in relation to those of the first layer (A), said synthetic polymer being selected from the group of synthetic polymers comprising at least one hydrolysable grouping.

23. Use according to claim 22, **characterised in that** the synthetic polymer is selected from the group of synthetic polymers comprising at least one hydrolysable chemical grouping.

24. Use according to claim 22 or 23, **characterised in that** the synthetic polymer is selected from the group of biodegradable, preferably compostable, synthetic polymers.

25. Use according to claim 24, **characterised in that** the synthetic polymer is selected from the group formed by poly(vinyl alcohol), poly(ethylene-co-vinyl alcohol), poly(caprolactone) and cellulose acetate.

26. Use according to any of claims 22 to 25, **characterised in that** the multilayered material (1) comprises at least one first layer (A) formed from a first material, separate from the mixture, and based largely on at least one natural polysaccharide.

27. Use according to claim 26, **characterised in that** the material forming the first layer (A) comprises, as majority component, flour extract, preferably wheat extract.

28. Use according to any of claims 22 to 27, **characterised in that** the natural polysaccharide present in the mixture is starch, preferably wheat starch.

## Patentansprüche

1. Mindestens teilweise biologisch abbaubares mehrlagiges Material, gebildet aus der Vereinigung:
- a) mindestens einer ersten Lage (A) eines ersten Materials, das überwiegend auf mindestens einem natürlichen Polysaccharid basiert,
- b) mindestens einer zweiten Lage (B) eines zweiten Materials, das ein Gemisch basierend auf mindestens einem natürlichen Polysaccharid und mindestens ein synthetisches Polymer umfasst, das so ausgewählt ist, dass seine mechanischen Eigenschaften besser sind als jene des natürlichen Polysaccharids, um ein mehrlagiges Material zu erhalten, das mechanische Eigenschaften aufweist, die besser sind als jene der ersten Schicht, wobei das synthetische Polymer ausgewählt ist aus der Gruppe synthetischer Polymere, die mindestens eine hydrolysierbare chemische Gruppe umfassen.

2. Material nach Anspruch 1, **dadurch gekennzeichnet, dass** das natürliche Polysaccharid in dem Gemisch der zweiten Lage (B) in einer Menge vorhanden ist, die ausreicht, um die Kompatibilität zwischen der ersten und der zweiten Lage (A, B) zu gewährleisten.

3. Material nach Anspruch 2, **dadurch gekennzeichnet, dass** das synthetische Polymer eine im Wesentlichen hydrophobe Hauptkette aufweist, die mit mindestens einer hydrophilen Gruppe ausgestattet ist.

4. Material nach irgendeinem der vorhergehenden Ansprüche, **dadurch gekennzeichnet, dass** das synthetische Polymer ausgewählt ist aus der Gruppe der biologisch abbaubaren, bevorzugt kompostierbaren, synthetischen Polymere.

5. Material nach Anspruch 4, **dadurch gekennzeichnet, dass** das synthetische Polymer ausgewählt ist aus der Gruppe gebildet aus Poly(vinylalkohol), Poly(ethylen-co-vinylalkohol), Poly(caprolacton), Celluloseacetat.

6. Material nach einem der Ansprüche 1 bis 5, **dadurch gekennzeichnet, dass** das erste Material überwiegend auf Mehl oder einem Getreideextrakt basiert.

7. Material nach Anspruch 6, **dadurch gekennzeichnet, dass** das erste Material als Hauptbestandteil Weizenextrakt umfasst.

8. Material nach Anspruch 7, **dadurch gekennzeichnet, dass** der Gehalt an Weizenextrakt im Bereich zwischen 50 % und 85 % liegt.

9. Material nach einem der vorhergehenden Ansprüche, **dadurch gekennzeichnet, dass** das erste Material Weichmacher, bevorzugt ausgewählt aus der Gruppe der Polyole, wie etwa Glycerol, Mannitol und Sorbitol, umfasst.

10. Material nach Anspruch 9, **dadurch gekennzeichnet, dass** der Gehalt an Weichmachern größer als 30 % ist, und für das Glycerol bevorzugt im Bereich zwischen 10 und 20 % liegt.

11. Material nach einem der vorhergehenden Ansprüche, **dadurch gekennzeichnet, dass** das erste Material mineralische Füllstoffe vom Typ Gips umfasst.

12. Material nach Anspruch 11, **dadurch gekennzeichnet, dass** der Gehalt an mineralischen Füllstoffen im Bereich zwischen 10 % und 20 %, im Fall von Gips bevorzugt in der Größenordnung von 5 liegt.

13. Material nach irgendeinem der vorhergehenden Ansprüche, **dadurch gekennzeichnet, dass** das natürliche Polysaccharid, das in dem Gemisch der ersten Lage (B) vorhanden ist, Stärke und bevorzugt Weizenstärke ist.

14. Material nach irgendeinem der vorhergehenden Ansprüche, **dadurch gekennzeichnet, dass** die Schmelzefließrate des ersten Materials im Bereich zwischen 7 und 30 g/10 Min., unter einer Last von 21,6 kg bei 150 °C, und bevorzugt in der Größenordnung von 22 g/10 Min. liegt.

15. Material nach irgendeinem der vorhergehenden Ansprüche, **dadurch gekennzeichnet, dass** die Schmelzefließrate des zweiten Materials im Bereich zwischen 0,2 und 1 g/10 Min., unter einer Last von 21,6 kg bei 150 °C, und bevorzugt in der Größenordnung von 0,5 g/10 Min. liegt.

16. Material nach einem der vorhergehenden Ansprüche, **dadurch gekennzeichnet, dass** die erste und die zweite Lage (A, B) direkt, ohne Zwischenlage aus Verträglichkeitsmacher, übereinander angeordnet sind.

17. Material nach einem der vorhergehenden Ansprüche, **dadurch gekennzeichnet, dass** die Lage (A) aus dem ersten Material zwischen zwei äußere Lagen (B) aus dem zweiten Material angeordnet wird.

18. Verfahren zur Herstellung eines mindestens teilweise biologisch abbaubaren mehrlagigen Materials (1), das einen Schritt (a) der Coextrusion eines ersten Materials, das überwiegend auf mindestens einem natürlichen Polysaccharid basiert, mit einem zweiten Material umfasst, das ein Gemisch basierend auf mindestens einem natürlichen Polysaccharid und mindesten einem synthetischen Polymer umfasst, das so ausgewählt ist, dass seine mechanischen Eigenschaften besser sind als jene des natürlichen Polysaccharids, um ein mehrlagiges Material zu erhalten, das mechanische Eigenschaften aufweist, die besser sind als jene des ersten Materials, wobei das synthetische Polymer ausgewählt ist aus der Gruppe der synthetischen Polymere, die mindestens eine hydrolysierbare Gruppe umfassen.

19. Verfahren nach Anspruch 18, **dadurch gekennzeichnet, dass** der Schritt (a) der Coextrusion mit Hilfe eines ersten Extruders, um mindestens eine erste Lage (A) aus dem ersten Material zu realisieren, und eines zweiten Extruders, um mindestens eine zweite Lage (B) aus dem zweiten Material zu realisieren, durchgeführt wird, wobei der erste und der zweite Extruder auf der selben Düse miteinander verbunden sind.

20. Verfahren nach Anspruch 18 oder 19, **dadurch gekennzeichnet, dass** der Schritt (a) der Coextrusion eine Phase der Herstellung einer oder mehrerer Folien aus dem mehrlagigen Material (1) mit Hilfe einer Breitschlitzdüse umfasst.

21. Verfahren nach Anspruch 20, **dadurch gekennzeichnet, dass** es einen Schritt (b) des Warmformens der Folie(n) umfasst.

22. Verwendung eines Gemischs basierend auf mindestens einem natürlichen Polysaccharid und mindestens einem synthetischen Polymer, das so ausgewählt ist, dass seine mechanischen Eigenschaften besser sind als jene des natürlichen Polysaccharids, um eine zweite Lage (B) innerhalb eines mindestens teilweise biologisch abbaubaren Materials (1) zu bilden, das mindestens eine erste Lage (A) umfasst, die überwiegend auf mindestens einem natürlichen Polysaccharid basiert, um die mechanischen Eigenschaften des mehrlagigen Materials (1) bezogen auf diejenigen der erste Lage (A) zu verbessern, wobei das synthetische Polymer ausgewählt ist aus der Gruppe der synthetischen Polymer, die mindestens eine hydrolysierbare Gruppe umfassen.

23. Verwendung nach Anspruch 22, **dadurch gekennzeichnet, dass** das synthetische Polymer ausgewählt ist aus der Gruppe synthetischer Polymere, die mindestens eine hydrolysierbare chemische Gruppe umfassen.

24. Verwendung nach Anspruch 22 oder 23, **dadurch gekennzeichnet, dass** das synthetische Polymer ausgewählt ist aus der Gruppe der biologisch abbaubaren, bevorzugt kompostierbaren, synthetischen Polymere.

25. Verwendung nach Anspruch 24, **dadurch gekennzeichnet, dass** das synthetische Polymer ausgewählt ist aus der Gruppe gebildet aus Poly(vinylalkohol), Poly(ethylen-co-vinylalkohol), Poly(caprolacton) und Celluloseacetat.

26. Verwendung nach einem der Ansprüche 22 bis 25, **dadurch gekennzeichnet, dass** das mehrlagige Material (1) mindestens eine erste Lage (A) umfasst, die aus einem ersten Material gebildet ist, das verschieden von dem Gemisch ist, und überwiegend auf mindestens einem natürlichen Polysaccharid basiert.

27. Verwendung nach Anspruch 26, **dadurch gekennzeichnet, dass** das Material, das die erste Lage (A) bildet, als Hauptbestandteil Mehlextrakt und bevorzugt Weizenextrakt umfasst.

28. Material nach einem der Ansprüche 23 bis 27, **dadurch gekennzeichnet, dass** das natürliche Polysaccharid, das in dem Gemisch vorhanden ist, Stärke und bevorzugt Weizenstärke ist.
